# FASCICULE DE BREVET EUROPEEN

(11) **EP 4 021 768 B1**
(45) Date de publication et mention de la délivrance du brevet: **21.02.2024**
(21) Numéro de dépôt: 20740058.1
(22) Date de dépôt: 20.07.2020
(51) Int. Cl.: B60S 1/34

(54) **EMBOUT D'EXTREMITE POUR BALAI D'ESSUIE-GLACE D'UN VEHICULE AUTOMOBILE**
ENDBESCHLAG FÜR WISCHERBLATT EINES KRAFTFAHRZEUGS
END FITTING FOR MOTOR VEHICLE WIPER BLADE

(30) Priorité: 30.08.2019 FR 1909605
(43) Date de publication de la demande: 06.07.2022
(73) Titulaire: Valeo Systèmes d'Essuyage, 78322 Le Mesnil Saint Denis (FR)
(72) Inventeur: GAUCHER, Vincent, 63500 ISSOIRE (FR); FAURIOL, Quentin, 63500 ISSOIRE (FR); KUCHLY, Nicolas, 63500 ISSOIRE (FR); ROUSSEL, Loic, 63500 ISSOIRE (FR)
(74) Mandataire: Valeo Visibility
(86) Numéro de dépôt international: PCT/EP2020/070494
(87) Numéro de publication internationale: WO 2021/037440

(56) Documents cités:
- EP-A1- 2 591 958
- WO-A1-2019/134756
- US-A- 5 349 719

## Description

L'invention se rapporte au domaine de l'essuyage et/ou du nettoyage des surfaces vitrées d'un véhicule automobile.

Les systèmes d'essuyage pour véhicules automobiles comprennent généralement au moins un bras d'entraînement qui effectue un mouvement de va-et-vient angulaire devant une surface à essuyer, un tel bras entraînant au moins un balai d'essuyage comprenant une lame d'essuyage réalisée dans un matériau souple et plaquée contre la surface à essuyer. Le balai d'essuyage est rattaché au bras d'entraînement du système d'essuyage par un ensemble de connexion configuré pour que, entraînée par les mouvements du balai et du bras, la lame d'essuyage frotte contre la surface à essuyer et en balaie l'eau et un certain nombre de salissures pour les évacuer en dehors du champ de vision du conducteur.

Le bras d'entraînement comprend un entraîneur par lequel il est lié à un dispositif d'entraînement configuré pour conférer au bras d'entraînement le mouvement de va-et-vient angulaire précédemment évoqué. Le bras d'entraînement comprend également une extrémité par laquelle il est lié au balai d'essuyage, cette extrémité comprenant notamment une chape qui reçoit l'ensemble de connexion entre le bras d'entraînement et le balai d'essuyage. Le bras d'entraînement comprend, en outre, une tige qui relie la chape à l'entraîneur. Entre la tige et l'entraîneur est disposé un ressort dont le rôle principal est de garantir un contact permanent entre le balai d'essuyage et la surface à essuyer contre laquelle ce dernier est plaqué. Autrement dit, le ressort est configuré pour conférer au balai d'essuyage une force d'appui sur la surface à essuyer, à la fois suffisamment importante pour éviter que la lame d'essuyage s'éloigne de la surface à essuyer lorsque le véhicule se déplace, par exemple à grande vitesse, et adaptée pour que le frottement de la lame d'essuyage sur la surface à essuyer permette l'essuyage recherché sans effort excessif pour l'entraîneur.

L'invention concerne plus particulièrement de tels systèmes d'essuyage équipés de moyens de projection d'un fluide de nettoyage de la surface à essuyer. Selon différents modes de réalisation, de tels moyens de projection peuvent être, par exemple, placés sur le balai d'essuyage lui-même, ou à l'extrémité du bras d'entraînement. D'une manière générale, le fluide de nettoyage est amené jusqu'au balai d'essuyage par au moins un tuyau qui s'étend en partie le long du bras d'entraînement.

Pour éviter une usure excessive, un tel tuyau ne doit pas venir au contact de la surface à essuyer lors des déplacements du balai d'essuyage. De plus, pour des raisons esthétiques, il est préférable qu'un tel tuyau demeure caché aux yeux des occupants du véhicule et soit aussi peu visible que possible depuis l'extérieur du véhicule. Une solution consiste à fixer le tuyau au bras d'entraînement au moyen d'un dispositif qui comprend, d'une part, des moyens de retenue du tuyau, et, d'autre part, des moyens de fixation au bras d'entraînement, par exemple par encliquetage élastique. Les moyens de fixation du tuyau au bras d'entraînement sont toutefois souvent volumineux, et nécessitent parfois, en raison de la configuration et de l'encombrement du bras d'entraînement, l'utilisation d'un outil de montage spécifique. Par ailleurs, les moyens connus dans l'état de la technique pour réaliser la fixation du tuyau au bras d'entraînement sont spécifiques de chaque bras d'entraînement, augmentant ainsi les efforts de conception, de fabrication, de référencement et de stockage de ces différents moyens de fixation du tuyau. D'autres publications, telle que par exemple la demande de brevet référencée EP-A-2591958, décrivent un support de fixation.

La présente invention a pour but de proposer une solution simple, moins encombrante et moins coûteuse que les solutions connues dans l'état de la technique pour réaliser la fixation d'un tuyau souple tel que précédemment évoqué sur un bras d'entraînement d'un système d'essuyage d'un véhicule automobile.

Dans ce but, l'invention a pour objet, selon un premier aspect, un support de fixation d'un tuyau d'acheminement de fluide à un bras d'entraînement d'un système d'essuyage d'un véhicule automobile, le bras d'entraînement comprenant au moins un ressort, le support de fixation comprenant au moins un manchon configuré pour retenir le tuyau d'acheminement, le support de fixation comprenant un corps cylindrique lié au manchon et configuré pour être inséré dans un volume entouré par le ressort du bras d'entraînement.

Il faut comprendre ici que le ressort du bras d'entraînement est un ressort à spires enroulées, et que le volume entouré par le ressort du bras d'entraînement est le volume que les spires enroulées d'un tel ressort délimitent ensemble. Ce volume est donc sensiblement cylindrique, et il faut donc comprendre que le corps du support de fixation selon l'invention est configuré pour être inséré dans une partie au moins de ce volume, le tuyau d'acheminement de fluide demeurant à l'extérieur de ce dernier, préférentiellement le long de celui-ci.

Il convient également ici de distinguer le volume du ressort du bras d'entraînement, tel que précédemment défini, et un volume du corps du support de fixation, délimité par la paroi sensiblement cylindrique de ce dernier. Selon l'invention, les spires du ressort délimitant ensemble le volume du ressort entourent une surface extérieure du corps du support de fixation, c'est-à-dire une surface de ce dernier située, selon une direction radiale perpendiculaire à l'axe de la forme sensiblement cylindrique qu'il présente, à l'extérieur du corps du support de fixation.

Par l'insertion, précédemment évoquée, du corps du support de fixation dans une partie au moins du volume du ressort du bras d'entraînement, l'invention permet de réduire notablement l'encombrement de la fixation d'un tuyau d'acheminement tel que précité à un bras d'entraînement d'un système d'essuyage dans un véhicule automobile : elle atteint donc bien au moins l'un des buts qu'elle s'était fixé.

Selon un exemple, le corps cylindrique est creux. Il comporte ainsi en son centre un évasement qui lui confère une certaine souplesse pour autoriser son insertion dans le volume délimité par la paroi interne des spires du ressort.

Avantageusement, le support de fixation selon l'invention est réalisé par injection, dans un moule, d'un matériau synthétique. Outre le faible coût d'une telle fabrication, l'utilisation d'un matériau synthétique, combinée à une configuration particulière creuse du corps du support de fixation, confère au corps du support de fixation selon l'invention une capacité de déformation élastique, notamment selon des directions radiales perpendiculaires à la direction longitudinale d'allongement du corps du support de fixation. Ceci permet l'utilisation d'un tel support de fixation avec différents types de ressorts de bras d'entraînement, notamment des ressorts dont le volume présente des diamètres différents. On standardise ainsi le support de fixation pour l'exploiter avec plusieurs types de bras d'entraînement.

L'invention peut également présenter, prises séparément ou en combinaison, une ou plusieurs des caractéristiques suivantes :
Le manchon s'étend selon une direction principale sensiblement parallèle à celle du corps du support de fixation. Dans ce qui suit, on désignera comme direction longitudinale du corps du support de fixation, la direction de l'axe de la forme cylindrique que celui-ci présente. Par extension, cette direction sera également désignée, dans ce qui suit, comme direction longitudinale du support de fixation selon l'invention et des éléments qui le constituent. Dans le support de fixation selon l'invention, le manchon s'étend donc principalement selon une direction sensiblement parallèle à la direction longitudinale précitée.

Selon un exemple de l'invention, le manchon est rattaché au corps du support de fixation à une extrémité, selon la direction longitudinale précédemment définie, de ce dernier. Cette extrémité sera, dans ce qui suit, arbitrairement désignée comme extrémité arrière du corps du support de fixation selon l'invention, et, par extension, comme extrémité arrière du support de fixation selon l'invention. En référence à cette dénomination, on désignera comme extrémité avant du corps du support de fixation et, par extension, comme extrémité avant du support de fixation selon l'invention, l'extrémité opposée, selon la direction longitudinale, à l'extrémité arrière précitée. Il résulte de ce qui précède que, dans un bras d'entraînement d'un système d'essuyage équipé d'un support de fixation selon l'invention, le corps du support de fixation est inséré dans un volume d'un ressort du bras d'entraînement de telle manière que son extrémité avant se trouve au sein du volume précité, et que son extrémité arrière, munie du manchon précité, affleure une extrémité d'engagement du ressort, c'est-à-dire l'extrémité de ce ressort par laquelle le corps du support de fixation est inséré dans le volume du ressort.

Selon un exemple de réalisation avantageux, le manchon présente la forme générale d'un cylindre creux dont l'axe est parallèle à l'axe longitudinal du corps du support de fixation, et ce cylindre creux comporte une ouverture qui s'étend longitudinalement d'une de ses extrémités longitudinales à l'autre.

Avantageusement, un diamètre intérieur du cylindre que forme le manchon est complémentaire d'un diamètre extérieur d'un tuyau d'acheminement d'un fluide de nettoyage tel que précédemment évoqué, de telle manière que l'élasticité du matériau utilisé pour réaliser le support de fixation selon l'invention permet une retenue du tuyau d'acheminement de fluide de nettoyage par encliquetage dans le cylindre creux que forme le manchon précité. Selon un exemple, le manchon du support de fixation selon l'invention est rattaché au corps de celui-ci par une base qui s'étend à partir de l'extrémité arrière du corps, sensiblement perpendiculairement à la direction longitudinale de ce dernier.

Le corps du support de fixation présente une forme sensiblement conique. Plus précisément, l'invention prévoit qu'un diamètre du corps du support de fixation augmente, selon la direction longitudinale, depuis l'extrémité arrière du corps jusqu'à l'extrémité opposée, selon la direction longitudinale, de ce dernier. En d'autres termes, un périmètre du corps du support de fixation selon l'invention, mesuré dans un plan perpendiculaire à l'axe longitudinal de ce dernier, augmente de l'extrémité arrière vers l'extrémité avant de celui-ci. En référence à ce qui précède, ceci permet de faciliter un blocage du support de fixation au sein du volume de ressorts dont le diamètre interne est différent.

Le corps du support de fixation comprend au moins une fente longitudinale configurée pour lui conférer une élasticité radiale. Plus précisément, la fente longitudinale précitée s'étend, selon la direction longitudinale du support de fixation, à partir de l'extrémité avant du corps du support de fixation et, dans un plan perpendiculaire à l'axe longitudinal du corps du support de fixation, et elle occupe une fraction du périmètre de ce corps. Plus précisément encore, cette fente débouche à l'extrémité longitudinale avant du corps du support de fixation, c'est-à-dire qu'elle s'étend sur une fraction angulaire du périmètre de l'extrémité avant du corps du support de fixation selon l'invention.

Selon un exemple de ce mode de réalisation, une dimension, mesurée selon la direction longitudinale précédemment définie, de la fente longitudinale est inférieure à une dimension longitudinale du corps du support de fixation.

Selon un exemple de réalisation, le corps de fixation comprend une pluralité de fentes longitudinales. Par exemple, les fentes longitudinales précitées sont au nombre de trois. Quel que soit leur nombre, ces fentes longitudinales sont avantageusement régulièrement réparties angulairement sur le pourtour du corps du support de fixation selon l'invention, c'est-à-dire autour de l'axe longitudinal de celui-ci. Avantageusement, la ou les fentes longitudinales présentent une forme évasée depuis son extrémité arrière, située au voisinage de l'extrémité arrière du corps du support de fixation, jusqu'à son extrémité avant, débouchante à l'extrémité avant du corps précité. Il résulte de ce qui précède que les fentes longitudinales définissent entre elles, dans le corps du support de fixation selon l'invention, des doigts, et que la présence de ces fentes longitudinales, combinée à l'élasticité du matériau qui forme le support de fixation selon l'invention, autorise des mouvements radiaux de ces doigts. En d'autres termes, sous l'effet d'une contrainte dirigée radialement vers l'axe longitudinal du corps et exercée de l'extérieur vers l'intérieur de ce dernier, la présence des fentes longitudinales permet que les doigts se rapprochent de l'axe longitudinal du corps et, donc les uns des autres, réduisant ainsi un diamètre extérieur du corps du support de fixation. Ceci permet, notamment, de faciliter l'insertion du corps du support de fixation dans des volumes intérieurs de ressorts de bras d'entraînement de diamètres différents, augmentant ainsi les possibilités d'utilisation du support de fixation selon l'invention. Cette aspect garantit également un effort d'accrochage suffisant entre le corps du support de fixation et le ressort.

Dans une position de repos du support de fixation, un diamètre du corps du support de fixation, mesuré à une extrémité longitudinale avant de ce dernier, est supérieur à un diamètre du corps mesuré à une extrémité longitudinale arrière de ce dernier. Il faut entendre ici comme position de repos du support de fixation selon l'invention une position dans laquelle le corps de ce dernier est à l'extérieur du volume d'un ressort d'un bras d'entraînement d'un système d'essuyage. A contrario, la position de travail du support de fixation est une position dans laquelle le corps de ce dernier est inséré dans une partie au moins d'un volume d'un tel ressort. Selon l'invention, les dimensions du corps du support de fixation sont définies de telle manière qu'un diamètre extérieur du corps, au voisinage de l'extrémité avant de celui-ci, est supérieur à un diamètre du volume d'un ressort dans lequel le corps du support de fixation est destiné à être inséré.

Le corps comprend une pluralité de nervures périphériques agencées radialement. Plus précisément, l'invention prévoit que ces nervures périphériques sont agencées en saillie d'une paroi extérieure du corps du support de fixation, c'est-à-dire d'une paroi de ce corps destinée à être placée contre une paroi interne d'un ressort d'un bras d'entraînement. Ces nervures périphériques sont, par exemple, perpendiculaires à l'axe du corps et parallèles entre elles. Selon un exemple, elles sont agencées, selon la direction longitudinale, sur une dimension sensiblement égale à une dimension longitudinale d'au moins une fente longitudinale. En d'autres termes, ces nervures périphériques sont agencées entre l'extrémité avant du corps du support de fixation et une extrémité arrière de la fente longitudinale précédemment décrite. Ces nervures peuvent former des anneaux qui émergent de la paroi externe du corps, de manière servir d'éléments de retenue dans le volume du ressort.

Une extrémité longitudinale du corps comprend un biseau. Plus précisément, le biseau précité est agencé à l'extrémité avant du corps du support de fixation. C'est-à-dire que, à son extrémité longitudinale avant, la paroi du corps du support de fixation selon l'invention a sensiblement la forme d'un tronc de cône dont le plus petit diamètre extérieur est celui de l'extrémité avant du corps. Avantageusement, ce biseau est réalisé par amincissement de la paroi extérieure du corps. Le rôle d'un tel biseau est notamment de faciliter l'engagement de l'extrémité avant du corps du support de fixation dans le volume, précédemment défini, d'un ressort d'un bras d'entraînement. Par ailleurs, la configuration d'un tel biseau permet que la contrainte exercée sur l'extrémité avant du corps lors de l'engagement de ce dernier dans le volume précité s'exerce radialement, conduisant ainsi à un rapprochement des doigts définis par les fentes longitudinales précédemment décrites, de l'axe longitudinal du corps, et, donc, à une diminution du diamètre de dernier, facilitant l'insertion de celui-ci dans le volume précité.

L'invention s'étend également, selon un deuxième aspect, à un bras d'entraînement d'un système d'essuyage pour véhicule automobile, comprenant notamment un entraîneur configuré pour être lié à un dispositif d'entraînement du bras d'entraînement, une extrémité configurée pour recevoir un balai d'essuyage du système d'essuyage, le bras d'entraînement comprenant un ressort lié, d'une part, à l'entraîneur et, d'autre part, à une tige reliée à l'extrémité configurée pour recevoir un balai d'essuyage, le bras d'entraînement comprenant un tuyau d'acheminement d'un fluide de nettoyage jusqu'au balai d'essuyage du système d'essuyage, caractérisé en ce que le bras d'entraînement comprend un support de fixation du tuyau d'acheminement tel qu'il vient d'être décrit.

Avantageusement, le ressort d'un tel bras d'entraînement est un ressort à spires enroulées, dont les spires délimitent ensemble, en l'entourant, un volume du ressort dans une partie au moins duquel le corps du support de fixation est destiné à être inséré.

En référence aux orientations et dénominations précédemment définies, dans un tel bras d'entraînement, la mise en place du support de fixation tel que précédemment décrit est tout d'abord réalisée par engagement de l'extrémité longitudinale avant du corps du support de fixation dans une extrémité d'engagement du volume, précédemment défini, du ressort du bras d'entraînement, de telle manière que l'axe longitudinal du corps du support de fixation et l'axe longitudinal du volume du ressort, sensiblement cylindrique, soient sensiblement confondus. Selon un exemple avantageux, mais non exclusif, l'extrémité d'engagement du volume du ressort est celle qui est, selon une direction principale d'extension du ressort, la plus proche de l'extrémité du bras d'entraînement par laquelle ce dernier est relié à l'entraîneur d'un système d'essuyage tel que précédemment évoqué.

L'engagement de l'extrémité avant du corps du support de fixation dans le volume du ressort est, comme précédemment décrit, facilité par la présence et par la configuration du biseau agencé à l'extrémité avant du corps. De plus, il résulte de ce qui précède que la contrainte qui s'exerce radialement sur le corps lors de son engagement dans le volume du ressort a pour effet de rapprocher les doigts, précédemment définis, que ce corps comporte, de l'axe longitudinal du support de fixation, et, donc, de réduire le diamètre extérieur de ce corps et de faciliter son insertion dans le volume précité.

La mise en place du support de fixation dans le ressort du bras d'entraînement se poursuit par une translation relative du corps vers l'intérieur du volume du ressort. Cette translation est effectuée selon la direction longitudinale du corps du support de fixation. Dans cette translation, il résulte, d'une part, de la forme sensiblement conique du corps et des dimensions, précédemment décrites, de celui-ci, et, d'autre part, de l'élasticité radiale conférée par les fentes longitudinales agencées dans le corps du support de fixation ainsi que de la souplesse du matériau utilisé pour réaliser le support de fixation, que les doigts définis par les fentes longitudinales précitées se déplacent radialement vers l'axe longitudinal du corps du support de fixation pour ajuster le diamètre extérieur de ce dernier au diamètre du volume intérieur du ressort. Il résulte, par ailleurs, de l'élasticité radiale conférée par les fentes longitudinales précédemment évoquées, ainsi que de l'élasticité naturelle du matériau utilisé pour réaliser le support de fixation, que les doigts précités ont naturellement tendance à s'écarter les uns des autres pour revenir à la position qu'ils occupent dans la position de repos, précédemment définie, du support de fixation, conduisant ainsi à un blocage du corps du support de fixation dans le volume du ressort.

La translation du corps du support de fixation à l'intérieur du ressort se poursuit jusqu'à ce que l'extrémité arrière du support de fixation, à laquelle est rattaché le manchon précédemment décrit, se trouve en butée contre la spire du ressort située à l'extrémité d'engagement du volume de celui-ci. Selon l'exemple, précédemment décrit, dans lequel le manchon du support de fixation est rattaché au corps de celui-ci par une base qui s'étend à partir de l'extrémité arrière du corps, sensiblement perpendiculairement à la direction longitudinale de l'axe de ce dernier, la translation du corps dans le volume du ressort se poursuit jusqu'à ce que la base précitée se trouve en butée contre la spire du ressort située à l'extrémité d'engagement.

Dans cette position, le corps du support de fixation est maintenu au sein du volume du ressort par la contrainte radiale, précédemment décrite, qui résulte de l'élasticité naturelle du matériau qui le constitue et de l'élasticité conférée par la présence des doigts délimités par les fentes longitudinales précédemment décrites, et il est maintenu longitudinalement au sein du volume du ressort par la présence des nervures périphériques précédemment décrites, qui se placent sensiblement entre des spires du ressort. L'invention permet ainsi un blocage simple et efficace du support de fixation avec le bras d'entraînement d'un système d'essuyage, tout en garantissant, par la présence du manchon du support de fixation, une retenue simple et efficace d'un tuyau d'acheminement d'un fluide de nettoyage vers l'extrémité du bras d'entraînement destinée à accueillir un balai d'essuyage du système d'essuyage précité.

Il ressort clairement, à la lecture de ce qui précède, que, par la configuration des fentes longitudinales et des doigts qu'elles définissent, ainsi que par les dimensions de son corps, un support de fixation tel que précédemment défini peut être utilisé avec différents types de ressorts dont, notamment, les diamètres des volumes intérieurs sont différents. Ceci permet une standardisation d'un tel support de fixation, et, donc une réduction du coût du bras d'entraînement et, plus généralement, du système d'essuyage.

L'invention s'étend enfin, selon un troisième aspect, à un procédé d'assemblage d'un bras d'entraînement tel que précédemment décrit, caractérisé en ce qu'il comprend une étape de mise en place d'un support de fixation tel qu'évoqué plus haut dans le volume du ressort du bras d'entraînement préalablement à une étape de montage du ressort, équipé de son support de fixation, entre l'entraîneur et la tige. Un tel séquencement d'étapes permet de réaliser un pré-assemblage d'un sous-ensemble constitué du ressort et du support de fixation. Ceci est avantageux car il est plus simple d'introduire le support dans le volume délimité par le ressort quand celui-ci est accessible, ce qui n'est pas le cas quand le ressort est attaché à l'entraîneur et à la tige, et logé dans le carter du bras d'entraînement.

D'autres caractéristiques, détails et avantages de l'invention apparaîtront plus clairement à l'aide de la description qui suit et des dessins parmi lesquels :
[Fig. 1] est une vue schématique d'un système d'essuyage destiné à essuyer/nettoyer une surface à essuyer d'un véhicule automobile,
[Fig. 2] est une vue partielle et en perspective d'une bras d'entraînement d'un système d'essuyage, tel que celui illustré par la figure 1,
[Fig. 3] est une vue en perspective d'un support de fixation selon le premier aspect de l'invention,
[Fig. 4] est une vue en coupe du support de fixation de la figure 3, selon un plan contenant sa direction longitudinale, reçu dans le volume d'un ressort d'un bras d'entraînement tel que celui illustré par la figure 2.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par le même repère.

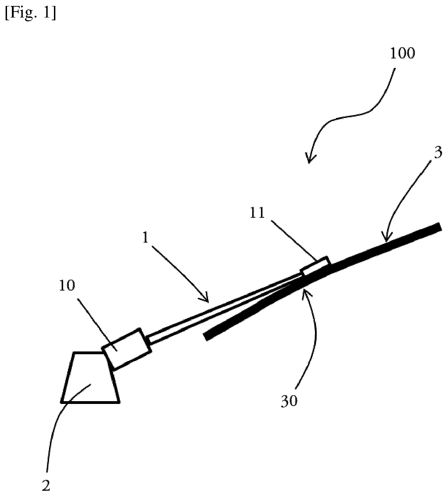

En référence à la figure 1, un système d'essuyage 100 destiné à un véhicule automobile comprend un bras d'entraînement 1 configuré pour effectuer un mouvement de va-et-vient angulaire contre une surface à essuyer, non représentée, du véhicule. Le bras d'entraînement 1 présente une forme allongée selon une direction principale d'extension, également désignée dans ce qui suit comme direction longitudinale du bras d'entraînement 1. A l'une de ses extrémités selon sa direction longitudinale, le bras d'entraînement 1 est relié à un dispositif d'entraînement 2 configuré pour lui conférer le mouvement de va-et-vient angulaire précité. Le dispositif d'entraînement 2 comprend, par exemple, un moteur électrique. Le bras d'entraînement 1 est relié au dispositif d'entraînement 2 par un entraîneur 10 schématiquement représenté sur la figure 1.

A son extrémité opposée 11 selon sa direction longitudinale, le bras d'entraînement 1 est relié à un balai d'essuyage 3 par un dispositif de connexion non détaillé sur la figure 1. Le balai d'essuyage 3 comporte notamment une lame racleuse 30, schématiquement évoquée sur la figure 1, réalisée dans un matériau souple. Entraîné dans un mouvement de va-et-vient angulaire contre la surface à essuyer du véhicule, le bras d'entraînement 1 entraîne à son tour le balai d'essuyage 3 et sa lame racleuse 30 qui, sous l'effet de ce mouvement, frotte la surface à essuyer et en évacue l'eau et les salissures éventuelles qui peuvent gêner la vision que le conducteur du véhicule a de son environnement.

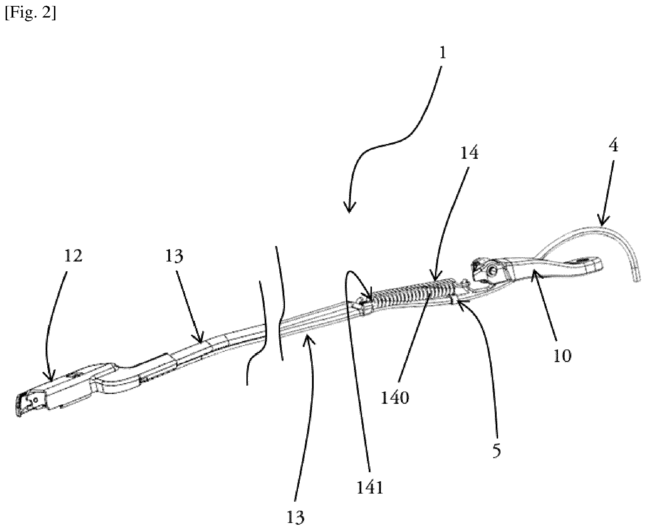

La figure 2 montre plus précisément un bras d'entraînement 1 selon l'invention.

On retrouve sur cette figure l'entraîneur 10 précédemment évoqué. Par ailleurs, en référence à la figure 2, le bras d'entraînement 1 comprend, à son extrémité opposée à l'extrémité comportant l'entraîneur 10, selon sa direction principale d'extension, une chape 12 destinée à recevoir le dispositif de connexion précédemment évoqué, non représenté sur la figure 2. Entre l'entraîneur 10 et la chape 12, le bras d'entraînement 1 comprend une tige 13 allongée, dont la direction principale d'allongement est sensiblement confondue avec la direction longitudinale du bras d'entraînement 1. A l'une de ses extrémités selon sa direction principale d'allongement, la tige 13 est reliée à la chape 12. A son extrémité opposée selon sa direction principale d'allongement, la tige 13 est reliée à l'entraîneur 10 par l'intermédiaire d'un carter, non illustré ici et par un ressort 14.

Le ressort 14 est un ressort à spires enroulées : selon l'exemple illustré par la figure 2, le ressort 14 présente une forme générale sensiblement cylindrique. Les spires 140 qui forment le ressort 14 délimitent ensemble un volume 141 du ressort 14. Le rôle du ressort 14 est essentiellement d'exercer, sur le bras d'entraînement 1, une force conduisant à garantir le plaquage du balai d'essuyage 3 contre la surface à essuyer, afin d'éviter que, dans les mouvements de va-et-vient du bras d'entraînement 1 et pendant le déplacement du véhicule, la lame racleuse 30 ne s'éloigne de la surface à essuyer.

Selon l'exemple illustré par la figure 2, un tuyau d'acheminement 4 longe le bras d'entraînement 1 sensiblement sur l'ensemble de la dimension longitudinale de ce dernier. En d'autres termes, le tuyau d'acheminement 4 longe le bras d'entraînement 1 depuis l'entraîneur 10 jusqu'à la chape 12.

Le tuyau d'acheminement 4 est configuré pour acheminer un fluide de nettoyage jusqu'à la chape 12, dans le but de réaliser une distribution de ce fluide de nettoyage au niveau du balai d'essuyage 3 du système d'essuyage 100. Selon différents exemples, une telle distribution peut être réalisée par un organe de projection associé à la chape 12 ou par le dispositif de connexion reçu dans la chappe 12, ou le fluide de nettoyage peut être réparti le long du balai d'essuyage 3 et/ou de la lame racleuse 30. Dans ce dernier cas, la balai d'essuyage comprend une rampe de projection qui s'étend sur tout ou partie de sa longueur.

Selon différents exemples, le fluide de nettoyage peut être un liquide ou un mélange de liquide, un gaz ou un mélange de gaz, ou un mélange de liquide et de gaz. Quelle que soit sa composition, le fluide de nettoyage est défini pour réaliser, en combinaison avec le mouvement de frottement de la lame racleuse 30, un nettoyage et un essuyage performants et reproductibles de la surface à essuyer considérée.

Selon un exemple, l'ensemble formé par la tige 13, le ressort 14 et le tuyau d'acheminement 4 est, dans la région du ressort 14, reçu dans le carter non représenté sur la figure 2. Le carter est avantageusement configuré pour s'étendre dans le prolongement de la tige 13 et de l'entraîneur 10, afin de former une surface sensiblement continue avec ces éléments, tout en protégeant le ressort 14 et le tuyau d'acheminement 4 dans cette région du bras d'entraînement 1.

Sur la figure 2 est également représenté un support de fixation 5 selon un premier aspect de l'invention, configuré pour lier mécaniquement le tuyau d'acheminement 4 au bras d'entraînement 1 afin, notamment, d'éviter toute usure prématurée du tuyau d'acheminement 4. Comme le montre la figure 2, le support de fixation 5 est avantageusement placé à l'extrémité du ressort 14 par laquelle ce dernier est relié à l'entraîneur 10.

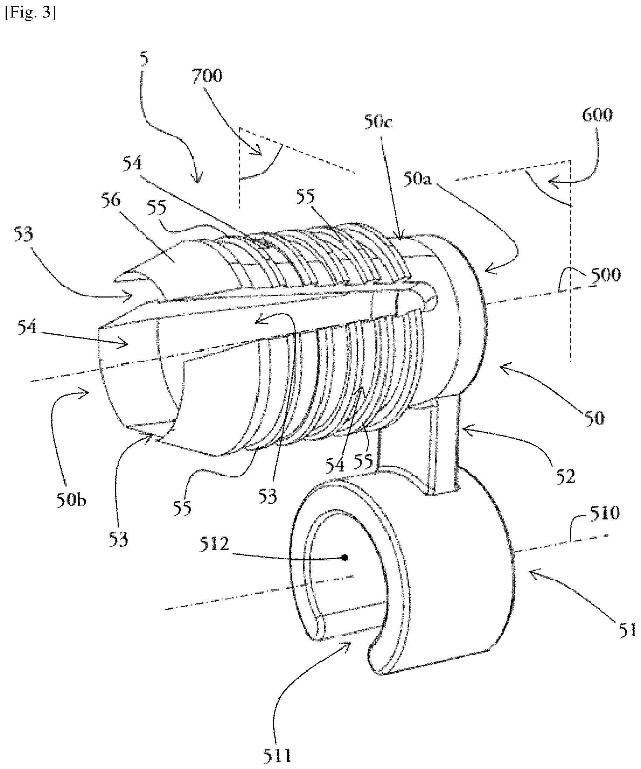

La figure 3 est une vue schématique en perspective d'un support de fixation 5 tel que celui visible sur la figure 2.

En référence à la figure 3, le support de fixation 5 comprend un corps 50 creux, de forme sensiblement conique d'axe 500, et un manchon 51. En référence aux orientations et dénominations précédemment définies, la direction de l'axe 500 du corps 50 représente la direction longitudinale du corps 50 et, par extension, la direction longitudinale du support de fixation 5 et des éléments qui le constituent. Avantageusement, le support de fixation 5 est réalisé par injection, dans un moule, d'un matériau synthétique de faible coût tel que, par exemple, un polypropylène ou un polyéthylène.

Le manchon 51 présente sensiblement la forme d'un cylindre creux dont l'axe 510 est sensiblement parallèle à l'axe longitudinal 500 du corps 50 du support de fixation 5.

Comme le montre la figure 3, le manchon 51 comporte une ouverture 511 qui s'étend parallèlement à l'axe 510 précité, d'une extrémité longitudinale du manchon 51 à l'extrémité longitudinale opposée de celui-ci. Plus précisément, selon l'exemple plus particulièrement illustré par la figure 3, l'ouverture 511 est agencée de telle manière qu'un plan longitudinal 600 contenant l'axe 500 du corps 50 et l'axe 510 du manchon 51 passe par le milieu de l'ouverture 511, selon une direction perpendiculaire au plan 600 précité,. En d'autres termes, un plan longitudinal 600 tel que précité est plan longitudinal médian de l'ouverture 511, et plus globalement du support de fixation 5.

Avantageusement, dans un bras d'entraînement 1 tel que celui illustré par la figure 2, le diamètre intérieur du cylindre formé par le manchon 51 est sensiblement égal à un diamètre extérieur du tuyau d'acheminement 4, de telle manière que ce dernier peut être reçu et maintenu par encliquetage, grâce à l'ouverture 511 précédemment décrite, dans l'espace 512 du cylindre creux que forme le manchon 51.

Selon l'exemple de réalisation illustré par la figure 3, le manchon 51 est relié au corps 50 par une base 52 perpendiculaire, ou sensiblement perpendiculaire, à l'axe 500 du corps 50 et à l'axe 510 du manchon 51. La base 52 par laquelle le manchon 51 est mécaniquement lié au corps 50 du support de fixation 5 est agencée à une extrémité longitudinale 50a du corps 50, désignée, en référence aux orientations et dénominations précédemment définies, comme extrémité longitudinale arrière 50a du corps 50 et du support de fixation 5.

En référence à la figure 3, le corps 50 du support de fixation 5 présente une forme générale sensiblement conique, d'axe 500, dont le diamètre augmente de l'extrémité arrière 50a du corps 50 vers l'extrémité avant 50b de ce dernier, l'extrémité avant 50b du corps 50 étant l'extrémité de celui-ci opposée, selon la direction longitudinale de l'axe 500, à l'extrémité arrière 50a précitée.

Plus précisément, dans un bras d'entraînement 1 selon l'invention tel que celui illustré par la figure 2, un diamètre du corps 50, mesuré au voisinage de son extrémité avant 50b, est supérieur à un diamètre du volume 141, précédemment défini, délimité par les spires 140 du ressort 14 du bras d'entraînement 1.

Selon l'exemple plus particulièrement illustré par la figure 3, le corps 50 du support de fixation 5 comprend trois fentes longitudinales 53 agencées parallèlement à l'axe 500 du corps 50, à partir de l'extrémité avant 50b de celui-ci. Les fentes longitudinales 53 sont donc sensiblement parallèles entre elles, et elles débouchent chacune à l'extrémité avant 50b du corps 50. Les fentes longitudinales 53 sont, par ailleurs, régulièrement angulairement réparties sur le pourtour du corps 50 ou, en d'autres termes, autour de l'axe 500 de celui-ci, et elles présentent sensiblement les mêmes dimensions selon la direction longitudinale précédemment définie. Comme le montre la figure 3, une dimension longitudinale de chaque fente longitudinale 53 est inférieure à une dimension longitudinale du corps 50, c'est-à-dire que les fentes longitudinales 53 ne débouchent pas à l'extrémité arrière 50a du corps 50.

Comme le montre la figure 3, une dimension de chaque fente longitudinale 53, mesurée sur le périmètre du corps 50, diminue de l'extrémité avant 50b vers l'extrémité arrière 50a du corps 50. En d'autres termes, mesurée dans un plan 700 perpendiculaire à l'axe 500 du corps 50, la fraction du périmètre du corps 50 occupée par une fente longitudinale 53 est d'autant plus faible que le plan 700 précité est situé longitudinalement à proximité de l'extrémité arrière 50a du corps 50.

Les fentes longitudinales 53 délimitent entre elles deux à deux des doigts 54 dont chacun a la forme d'une portion de tronc de cône. Il résulte de la forme et des dimensions des fentes longitudinales 53 que la portion du périmètre du corps 50, mesurée dans un plan 700 tel que précédemment défini, occupé par un doigt 54, augmente de l'extrémité avant 50b du corps 50 vers l'extrémité arrière 50a de ce dernier. Il résulte de l'élasticité du matériau utilisé pour réaliser le support de fixation 5 et de la configuration des fentes longitudinales 53 que les doigts 54 peuvent, sous l'effet d'une contrainte exercée radialement par rapport à l'axe 500 du corps 50 et dirigée vers l'axe 500 de celui-ci, se rapprocher de l'axe 500 précité. Lors d'un tel mouvement, les doigts 54 se rapprochent les uns des autres, réduisant ainsi le diamètre du corps 50 à l'extrémité avant 50b de celui-ci.

Comme le montre la figure 3, le corps 50 du support de fixation 5 comprend également une pluralité de nervures périphériques 55, sensiblement parallèles entre elles et agencées en saillie d'une surface extérieure 500 du corps 50. Selon l'exemple illustré par la figure 3, les nervures périphériques 55 sont sensiblement circulaires, et elles s'étendent sensiblement dans des plans perpendiculaires à l'axe longitudinal 500 du corps 50. Comme le montre la figure 3, les nervures périphériques 55 sont agencées sur la partie du corps 50 dans laquelle sont ménagées les fentes longitudinales 53 précédemment décrites. Autrement dit, les nervures périphériques sont agencées sur les doigts 54 précédemment évoqués.

Selon l'exemple plus particulièrement illustré par la figure 3, les nervures périphériques 55 sont au nombre de six.

Le corps 50 du support de fixation 5 comprend également, à son extrémité avant 50b, un biseau 56. Comme le montre la figure 3, le biseau 56 est réalisé par amincissement de la paroi formant le corps 50 à l'extrémité avant 50b de ce dernier. En d'autres termes, la paroi du corps 50 présente, au voisinage de l'extrémité avant 50b de ce dernier, une forme conique dont le diamètre le plus faible se situe à l'extrémité avant 50b du corps 50, qui constitue également, en référence aux dénominations et orientations précédemment définies, l'extrémité avant du biseau 56. Dans un bras d'entraînement 1 selon l'invention tel qu'illustré par la figure 2, un diamètre extérieur du corps 50 à l'extrémité avant du biseau 56 est avantageusement inférieur à un diamètre du volume 141 du ressort 14 précédemment décrit. Un diamètre du corps 50 à l'extrémité arrière du biseau 56 la plus proche, selon la direction longitudinale du support de fixation 5, de l'extrémité arrière 50a du corps 50, est avantageusement supérieur à un diamètre du volume 141 précité.

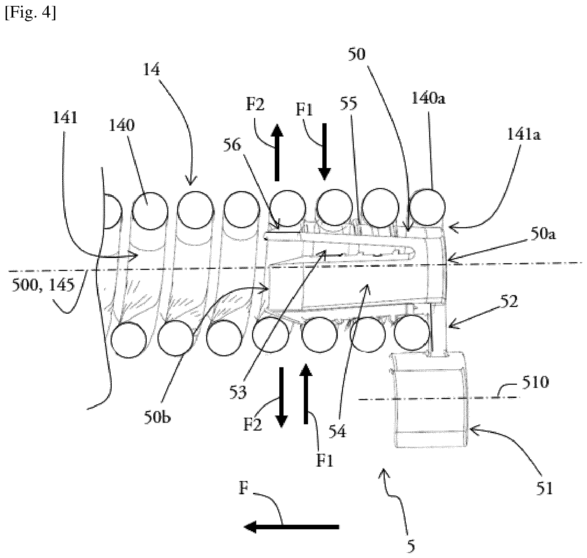

La figure 4 montre, en coupe selon un plan contenant l'axe 500 du corps 50 et l'axe 510 du manchon 51, le support de fixation 5 tel que celui illustré par la figure 3, inséré dans le volume 141 d'un ressort 14 d'un bras d'entraînement 1 tel que celui illustré par la figure 2.

Une telle insertion est réalisée, dans un premier temps, par engagement de l'extrémité avant 50b du corps 50 du support de fixation 5 dans une extrémité d'engagement 141a du volume 141 du ressort 14. Plus précisément, le biseau 56 précédemment décrit est tout d'abord engagé dans l'extrémité d'engagement 141a. Cet engagement est facilité par la présence du biseau 56 et par la dimension du diamètre avant de ce dernier, inférieur à un diamètre intérieur du volume 141 du ressort 14 comme précédemment indiqué.

L'insertion du corps 50 du support de fixation 5 dans le volume 141 précité se poursuit par une translation relative du corps 50 du support de fixation 5 par rapport au ressort 14, selon la direction longitudinale du corps 50. La direction de cette translation est illustrée par la flèche F sur la figure 4, elle est dirigée de l'extrémité d'engagement 141a du volume 141 vers l'intérieur de ce dernier. Il est à noter que, comme le montre la figure 4, dans cette translation, l'axe 500 du corps 50 du support de fixation 5 et un axe principal d'extension 145 du ressort 14 et du volume 141 que les spires 140 du ressort 14 entourent ensemble sont sensiblement confondus.

Lors de cette translation, les spires 140 du ressort 14 exercent, sur le corps 50 du support de fixation, une contrainte dirigée radialement vers l'axe longitudinal 500, 145, commun au corps 50 et au ressort 14 : une direction de cette contrainte est illustrée par les flèches F1 sur la figure 4. Il résulte de l'élasticité du matériau constituant le support de fixation 5, ainsi que de la présence des fentes longitudinales 53 précédemment décrites, que, sous l'effet de la contrainte radiale précitée, les doigts 54 du corps 50 se déplacent radialement vers l'axe commun 500, 145 précité, conduisant à une réduction du diamètre extérieur du corps 50 et rendant ainsi possible le coulissement de celui-ci au sein du volume 141 du ressort 14.

Selon l'exemple illustré par la figure 4, la translation précitée se poursuit jusqu'à ce que la base 52 par laquelle le manchon 51 est rattaché au corps 50 du support de fixation 5 se trouve en butée contre la spire d'extrémité 140a située à l'extrémité d'engagement 141a précédemment définie. Dans cette position, il résulte de l'élasticité du matériau constituant le support de fixation 5 et de la présence des fentes longitudinales 53 que les doigts 54, ayant naturellement tendance à reprendre leur position initiale, ont tendance à s'écarter de l'axe commun 500, 145 au corps 50 et au ressort 14 en exerçant, sur les spires 140 du ressort 14, une contrainte radiale dirigée à l'opposé de l'axe commun 500, 145. Ces contraintes radiales sont illustrées par les flèches F2 sur la figure 4. Il résulte alors respectivement des dimensions radiales du corps 50 et du diamètre du volume 141 un blocage du corps 50 du support de fixation 5 au sein du volume 141 précité. Un blocage longitudinal du corps 50 dans le volume 141 est réalisé par les nervures périphériques 55 précédemment décrites, ces dernières jouant le rôle de dents s'insérant partiellement, selon des directions radiales, entre des spires 140 du ressort 14, comme le montre la figure 4.

L'invention, telle qu'elle vient d'être décrite, permet donc, grâce à un support de fixation 5 tel que celui illustré par la figure 3, de lier mécaniquement de manière simple à un bras d'entraînement 1 d'un système d'essuyage 100, un tuyau d'acheminement 4 d'un fluide de nettoyage. Par ailleurs, la configuration du manchon 51 du support de fixation 5 permet une retenue simple et efficace du tuyau d'acheminement 4. Grâce à l'insertion du corps 50 du support de fixation 5 dans le volume 141 d'un ressort 14 du bras d'entraînement 1, l'invention permet de réduire l'encombrement de cette liaison mécanique. Par ailleurs, la configuration et les dimensions du corps 50 du support de fixation 5 et, notamment, la présence des fentes longitudinales 53 précédemment décrites, permettent l'utilisation du support de fixation avec différents ressorts 14 dont les diamètres du volume 141 peuvent varier. L'invention permet donc une réduction du coût de fabrication d'un bras d'entraînement 1 tel que celui illustré par la figure 2.

L'invention ne saurait toutefois se limiter aux moyens et configurations décrits et illustrés, et elle s'applique également à tous moyens ou configurations équivalents et à toute combinaison de tels moyens. En particulier, si l'invention a été décrite selon un exemple dans lequel le corps 50 du support de fixation 5 comprend trois fentes longitudinales 53, il va de soi que l'invention s'applique quel que soit le nombre, supérieur à deux, de fentes longitudinales 53, dans la mesure où ces dernières sont angulairement réparties autour de l'axe 500 du corps 50 précité.

## Revendications

1. Support de fixation (5) d'un tuyau d'acheminement (4) de fluide à un bras d'entraînement (1) d'un système d'essuyage (100) d'un véhicule automobile, le bras d'entraînement (1) comprenant au moins un ressort (14), le support de fixation (5) comprenant au moins un manchon (51) configuré pour retenir le tuyau d'acheminement (4), **caractérisé en ce que** le support de fixation (5) comprend un corps cylindrique (50) lié au manchon (51) et configuré pour être inséré dans un volume (141) entouré par le ressort (14) du bras d'entraînement (1).

2. Support de fixation (5) selon la revendication précédente, dans lequel le manchon (51) s'étend selon une direction principale (510) sensiblement parallèle à celle du corps (50) du support de fixation (5).

3. Support de fixation (5) selon l'une quelconque des revendications précédentes, dans lequel le corps (50) présente une forme conique.

4. Support de fixation (5) selon l'une quelconque des revendications précédentes, dans lequel le corps (50) comprend au moins une fente longitudinale (53) configurée pour lui conférer une élasticité radiale.

5. Support de fixation (5) selon l'une quelconque des revendications précédentes, **caractérisé en ce que**, dans une position de repos du support de fixation (5), un diamètre du corps (50) du support de fixation (5) mesuré à une extrémité longitudinale avant (50b) de ce dernier est supérieur à un diamètre du corps (50) mesuré à une extrémité longitudinale arrière (50a) du corps (50).

6. Support de fixation (5) selon la revendication précédente, dans lequel l'extrémité longitudinale avant (50b) du corps (50) comprend un biseau (56).

7. Support de fixation (5) selon l'une quelconque des revendications précédentes, dans lequel le corps (50) comprend une pluralité de nervures périphériques (55) agencées radialement.

8. Bras d'entraînement (1) d'un système d'essuyage (100) pour véhicule automobile, comprenant un entraîneur (10) configuré pour être lié à un dispositif d'entraînement (2) du bras d'entraînement (1), une extrémité (11) configurée pour recevoir un balai d'essuyage (3) du système d'essuyage (500), le bras d'entraînement (1) comprenant un ressort (14) lié, d'une part, à l'entraîneur (10) et, d'autre part, à une tige (13) reliée à l'extrémité (11) configurée pour recevoir un balai d'essuyage (3), le bras d'entraînement (1) comprenant un tuyau d'acheminement (4) d'un fluide de nettoyage jusqu'au balai d'essuyage (3) du système d'essuyage (500), **caractérisé en ce que** le bras d'entraînement comprend un support de fixation (5) du tuyau d'acheminement (4) selon l'une quelconque des revendications précédentes.

9. Système essuie-glace (500) pour un véhicule automobile, **caractérisé en ce qu'**il comporte au moins un bras d'entraînement (1) selon la revendication 8 et un balai d'essuyage (3) porté par une extrémité du bras d'entraînement (1).

10. Procédé d'assemblage d'un bras d'entraînement (1) selon la revendication 8, **caractérisé en ce qu'**il comprend une étape de mise en place d'un support de fixation (5) selon l'une quelconque des revendications 1 à 7 dans le volume (141) du ressort (14) du bras d'entraînement (1) préalablement à une étape de montage du ressort (14), équipé de son support de fixation (5), entre l'entraîneur (10) et la tige (13).

## Patentansprüche

1. Halterung (5) zur Befestigung eines Rohrs (4) zur Beförderung eines Fluids an einem Arm (1) zum Antrieb eines Wischsystems (100) eines Kraftfahrzeugs, wobei der Antriebsarm (1) zumindest eine Feder (14) umfasst, wobei die Befestigungshalterung (5) zumindest eine Hülse (51) umfasst, die dazu ausgelegt ist, das Förderrohr (4) zu halten, **dadurch gekennzeichnet, dass** die Befestigungshalterung (5) einen zylindrischen Körper (50) umfasst, der mit der Hülse (51) verbunden und dazu ausgelegt ist, in ein Volumen (141) eingeführt zu werden, das von der Feder (14) des Antriebsarms (1) umgeben ist.

2. Befestigungshalterung (5) nach dem vorangehenden Anspruch, wobei sich die Hülse (51) in einer Hauptrichtung (510) erstreckt, die im Wesentlichen parallel zu der des Körpers (50) der Befestigungshalterung (5) verläuft.

3. Befestigungshalterung (5) nach einem der vorangehenden Ansprüche, wobei der Körper (50) eine konische Form aufweist.

4. Befestigungshalterung (5) nach einem der vorangehenden Ansprüche, wobei der Körper (50) zumindest einen Längsschlitz (53) aufweist, der dazu ausgelegt ist, ihm eine radiale Elastizität zu verleihen.

5. Befestigungshalterung (5) nach einem der vorangehenden Ansprüche, **dadurch gekennzeichnet, dass** in einer Ruheposition der Befestigungshalterung (5) ein Durchmesser des Körpers (50) der Befestigungshalterung (5), gemessen an einem vorderen Längsende (50b) desselben, größer ist als ein Durchmesser des Körpers (50), gemessen an einem hinteren Längsende (50a) des Körpers (50) .

6. Befestigungshalterung (5) nach dem vorangehenden Anspruch, wobei das vordere Längsende (50b) des Körpers (50) eine Abschrägung (56) umfasst.

7. Befestigungshalterung (5) nach einem der vorangehenden Ansprüche, wobei der Körper (50) eine Vielzahl von radial angeordneten Umfangsrippen (55) aufweist.

8. Arm (1) zum Antrieb eines Wischersystems (100) für ein Kraftfahrzeug, umfassend einen Mitnehmer (10), der dazu ausgelegt ist, mit einer Antriebsvorrichtung (2) des Antriebsarms (1) verbunden zu sein, und ein Ende (11), das dazu ausgelegt ist, ein Wischblatt (3) des Wischersystems (500) aufzunehmen, wobei der Antriebsarm (1) eine Feder (14) umfasst, die einerseits mit dem Mitnehmer (10) und andererseits mit einer mit dem Ende (11) verbundenen Stange (13) verbunden ist, die dazu ausgelegt ist, ein Wischblatt (3) aufzunehmen, wobei der Antriebsarm (1) ein Rohr (4) zum Fördern eines Reinigungsfluids zum Wischblatt (3) des Wischersystems (500) umfasst, **dadurch gekennzeichnet, dass** der Antriebsarm eine Halterung (5) zur Befestigung des Förderrohrs (4) nach einem der vorangehenden Ansprüche umfasst.

9. Scheibenwischersystem (500) für ein Kraftfahrzeug, **dadurch gekennzeichnet, dass** es zumindest einen Antriebsarm (1) nach Anspruch 8 und ein Wischblatt (3), das von einem Ende des Antriebsarms (1) getragen wird, umfasst.

10. Verfahren zum Zusammenbau eines Antriebsarms (1) nach Anspruch 8, **dadurch gekennzeichnet, dass** es einen Schritt des Einsetzens einer Befestigungshalterung (5) nach einem der Ansprüche 1 bis 7 in das Volumen (141) der Feder (14) des Antriebsarms (1) vor einem Schritt der Montage der mit ihrer Befestigungshalterung (5) ausgestatteten Feder (14) zwischen dem Mitnehmer (10) und der Stange (13) umfasst.

## Claims

1. Bracket (5) for fixing a fluid delivery tube (4) to a drive arm (1) of a wiper system (100) of a motor vehicle, the drive arm (1) comprising at least one spring (14), the fixing bracket (5) comprising at least one sleeve (51) configured to retain the delivery tube (4), **characterized in that** the fixing bracket (5) comprises a cylindrical body (50) that is linked to the sleeve (51) and is configured to be inserted in a volume (141) surrounded by the spring (14) of the drive arm (1).

2. Fixing bracket (5) according to the preceding claim, wherein the sleeve (51) extends along a main direction (510) substantially parallel to that of the body (50) of the fixing bracket (5).

3. Fixing bracket (5) according to either one of the preceding claims, wherein the body (50) has a conical shape.

4. Fixing bracket (5) according to any one of the preceding claims, wherein the body (50) comprises at least one longitudinal slot (53) configured to give it radial elasticity.

5. Fixing bracket (5) according to any one of the preceding claims, **characterized in that**, in a rest position of the fixing bracket (5), a diameter of the body (50) of the fixing bracket (5) measured at a front longitudinal end (50b) of the latter is greater than a diameter of the body (50) measured at a rear longitudinal end (50a) of the body (50).

6. Fixing bracket (5) according to the preceding claim, wherein the front longitudinal end (50b) of the body (50) comprises a bevel (56).

7. Fixing bracket (5) according to any one of the preceding claims, wherein the body (50) comprises a plurality of radially arranged peripheral ribs (55).

8. Drive arm (1) of a wiper system (100) for a motor vehicle, comprising a driver (10) configured to be linked to a device (2) for driving the drive arm (1), an end (11) configured to receive a windshield wiper (3) of the wiper system (500), the drive arm (1) comprising a spring (14) linked, on one end, to the driver (10) and, on the other end, to a rod (13) connected to the end (11) that is configured to receive a windshield wiper (3), the drive arm (1) comprising a tube (4) for delivering a cleaning fluid to the windshield wiper (3) of the wiper system (500), **characterized in that** the drive arm comprises a bracket (5) for fixing the delivery tube (4) according to any one of the preceding claims.

9. Wiper system (500) for a motor vehicle, **characterized in that** it has at least one drive arm (1) according to Claim 8 and a windshield wiper (3) borne by one end of the drive arm (1).

10. Method for assembling a drive arm (1) according to Claim 8, **characterized in that** it comprises a step of installing a fixing bracket (5) according to any one of Claims 1 to 7 in the volume (141) of the spring (14) of the drive arm (1) prior to a step of mounting the spring (14), equipped with its fixing bracket (5), between the driver (10) and the rod (13).
